# EUROPÄISCHE PATENTSCHRIFT

(11) **EP 1 895 267 B1**
(45) Veröffentlichungstag und Bekanntmachung des Hinweises auf die Patenterteilung: **19.08.2009**
(21) Anmeldenummer: 06017926.4
(22) Anmeldetag: 28.08.2006
(51) Int. Cl.: G01B 11/26, G01B 21/22, F01D 17/16

(54) **Vorrichtung zur Bestimmung der Winkellage einer drehbaren Verdichterleitschaufel**
Apparatus for determining the angular position of a rotatable compressor guide vane
Dispositif destiné à la détermination de la position angulaire d'une aube directrice de compresseur rotative

(43) Veröffentlichungstag der Anmeldung: 05.03.2008
(73) Patentinhaber: SIEMENS AKTIENGESELLSCHAFT, 80333 München (DE)
(72) Erfinder: Braun, Joachim, 45472 Mülheim an der Ruhr (DE); Loch, Walter, 45472 Mülheim an der Ruhr (DE); Pollack, Bernd, 45355 Essen (DE); Shevchenko, Vadim, 44265 Dortmund (DE); Simmchen, Joachim, 51429 Bergisch Gladbach (DE)

(56) Entgegenhaltungen:
- DE-A1- 10 322 703
- JP-A- 2005 181 023

## Beschreibung

Die Erfindung betrifft eine Vorrichtung zur Bestimmung der Winkellage einer in einem Verdichter angeordneten, sich um ihre Längsachse drehbaren Verdichterleitschaufel, der eine sich synchron mit ihr drehende Messfläche zugeordnet ist.

Es ist bekannt, dass bei dem Zusammenbau von sich um ihre Längsachse verstellbaren Verdichterleitschaufeln und dem dazugehörigen Verstellantrieb diese einzeln mittels einer Vorrichtung zu einer am Leitschaufelträger angeordneten Referenznut ausgerichtet werden. Dies ist erforderlich, damit alle Schaufelblätter des Verdichterleitschaufelrings stets identische Staffelungswinkel aufweisen, um im Betrieb eine synchrone Anströmung der nachfolgenden Verdichterlaufschaufeln zu gewährleisten. Eine asynchrone Anströmung der Verdichterlaufschaufeln könnte zu einer Schwingungsanregung von einzelnen Schaufelblättern der Laufschaufeln führen. Dies könnte sich im ungünstigsten Falle schädigend auf die Laufschaufeln auswirken. Um diese ungewünschte und möglicherweise kritische Betriebssituation des Verdichters zu vermeiden, ist vor der Inbetriebnahme des Verdichters eine Überprüfung der Montagequalität durch eine abschließende Vermessung der Winkellage aller verstellbaren Leitschaufeln erforderlich.

Bisher wurde die Winkelstellung der Leitschaufeln mittels eines Universalwinkelmessers und einer Hilfsvorrichtung gemessen. Die Hilfsvorrichtung, die an der Referenznut am Leitschaufelträger angelegt wurde, diente als Anschlag für den einen Messschenkel des Winkelmessers. Die rückseitige Seitenfläche eines an der verdrehbaren Verdichterleitschaufel angeordneten Verstellhebels diente als Anschlagsfläche für den zweiten Messschenkel des Winkelmessers, an dem dann die Winkellage der Leitschaufel abgelesen werden konnte. Bedingt durch die beengten Platzverhältnisse am Verdichter und je nach Position der zu überprüfenden Verdichterleitschaufel am Umfang konnte es zu Ablesefehlern und nicht exakt angelegten Messschenkeln kommen. Dies konnte insbesondere der Fall sein, wenn der Monteur über Kopf arbeiten muss. Durch die fehlerhafte Kontrolle konnte es möglich sein, dass korrekt eingestellte Leitschaufeln unnötigerweise in eine fehlerhafte Position verstellt oder Fehlstellungen von Verdichterleitschaufeln nicht erkannt wurden. Insgesamt konnte dies zu über den Umfang gesehen zum Teil ungleichmäßig eingestellten Staffelungswinkel der Schaufelblätter von drehbaren Leitschaufeln führen. Eine weitere Fehlerquelle, die zu einer geringfügig asymmetrischen Einstellung der Verdichterleitschaufeln führen kann, sind die Toleranzen durch die Verwendung der Hilfsvorrichtung.

Aufgabe der vorliegenden Erfindung ist daher die Bereitstellung einer Vorrichtung zur Bestimmung der Winkellage einer in einem Verdichter angeordneten, sich um ihre Längsachse drehbaren Verdichterleitschaufel, bei der Ablesefehler vermieden und Messtoleranzen weiter verringert werden können.

Die Aufgabe wird durch eine Vorrichtung gelöst, welche gemäß den Merkmalen des Anspruchs 1 ausgebildet ist. Die Vorrichtung umfasst eine Halteeinrichtung, die zur Befestigung der Vorrichtung am Verdichter oder an dessen Leitschaufelträger vorgesehen ist. Ferner umfasst die Vorrichtung eine Mess- und Auswerteeinheit, welche zumindest zwei Distanz-Sensoren umfasst, welche jeweils eine Distanz zu der aus einer Referenzlage herausdrehbaren Messfläche erfassen können, wodurch von der Auswerteeinheit die Winkellage der Messfläche bezogen auf ihre Referenzlage in Abhängigkeit der beiden erfassten Distanzen bestimmbar ist. Die Erfindung geht von der Erkenntnis aus, dass Ablesefehler vermieden werden, sofern die Messung des Verdrehwinkels bzw. der Winkellage der Verdichterleitschaufel automatisiert erfolgen kann. Zwei Distanz-Sensoren messen nach dem Einschalten der Vorrichtung jeweils eine Distanz zur der den Staffelungswinkel der Schaufelblätter der Verdichtleitschaufeln repräsentierenden Messfläche. Aufgrund der um die Längsachse schwenkbaren Messfläche werden in Abhängigkeit ihrer Winkellage zwei unterschiedliche Distanzen ermittelt. Aus der Differenz der beiden Distanzen und unter Berücksichtigung des Abstandes zwischen den beiden Distanz-Sensoren zueinander kann die tatsächliche Winkellage unter Anwendung von trigonometrischen Funktionen bestimmt werden.

Aufgrund der automatisierten Erfassung der Größen mit Hilfe der Vorrichtung wird vermieden, dass mechanische Ungenauigkeiten wie beispielsweise nicht exakt angelegte Messschenkel an der Hilfsvorrichtung bzw. an dem Verstellhebel das Messergebnis beeinflussen können. Außerdem kann mit der vorgeschlagenen Messvorrichtung die Messgenauigkeit wesentlich gesteigert werden, die durch die Toleranzen des Universalwinkelmessers hervorgerufen worden sind.

Bedingt durch die selbsttätige Erfassung von zwei Distanzen und deren Verknüpfung zu einer Differenz entfällt zudem das Kalibrieren der beiden Distanz-Sensoren. Eine Justierung der beiden Distanz-Sensoren ist jedoch weiterhin erforderlich, wobei lediglich sichergestellt werden muss, dass bei tatsächlich vorhandenen, identischen Abstand zwischen jeweiligen Distanz-Sensor und zugehörigem Messpunkt auf der Messfläche diese auch tatsächlich einen identischen Abstand erfassen.

Vorteilhafte Ausgestaltungen sind in den Unteransprüchen angeben.

Vorzugsweise sind die Distanz-Sensoren als handelsübliche Laser-Distanz-Sensoren ausgebildet. Da somit die Messschenkel eines Winkelmessers entfallen, können diese auch nicht fehlerhaft an Anlageflächen angelegt werden, wodurch eine mögliche Fehlerursache eliminiert worden ist. Beispielsweise arbeiten die Laser-Distanz-Sensoren nach dem Prinzip der Triangulation.

In einer besonders bevorzugten Ausgestaltung der Erfindung sind die Distanz-Sensoren und gegebenenfalls die Umlenkeinrichtung derart zueinander angeordnet, dass jeder von den Distanz-Sensoren erfassbare Strahl sich in jeweils einem auf der Messfläche angeordnetem Messpunkt abzeichnet. Eine fiktive, die beiden Messpunkte verbindende Gerade erstreckt sich dabei quer, vorzugsweise senkrecht zur Längsachse. Dies ermöglicht, dass die Vorrichtung nicht exakt entlang des Umfangs und somit auch gegenüber der Längsachse ausgerichtet werden muss. Oder mit anderen Worten: Unabhängig von ihrer Position entlang des Umfangs kann die Vorrichtung aufgrund dieses Merkmals stets dieselbe Winkellage der Messfläche ermittelt.

Um eine besonders kompakte und auf die beengten Platzverhältnisse eines Verdichters angepasste Vorrichtung zur Bestimmung der Winkellage von Verdichterleitschaufeln anzugeben, sind die von den Distanz-Sensoren aussendbaren Strahlen über mindestens eine Umlenkeinheit auf die Messfläche umlenkbar. Ebenso sind die von der Messfläche im Messpunkt reflektierten Strahlen über diese Umlenkeinheit zu den Distanz-Sensoren zurückführbar, damit diese anhand des Laufzeitsignals der Strahlen die jeweilige Distanz exakt erfassen können.

Folglich ist vor Verwendung der Vorrichtung so abzugleichen, dass die Distanz-Sensoren bei identischem Abstand zur Messfläche dieser auch einen identischen Abstand tatsächlich erfassen.

Zur besonders einfachen und temporären Befestigung der Vorrichtung an einem Verdichter weist die Halteineinrichtung der Vorrichtung mehrere Magnete, insbesondere mehrere Dauermagnete auf. Mittels Dauermagnete kann die Halteeinrichtung besonders einfach vorübergehend am Verdichter befestigt und nach durchgeführter Messung wiederum entfernt werden. Ebenso ermöglicht die Verwendung von Magneten die Bedienung der Vorrichtung durch lediglich einen Bediener.

Um die Vorrichtung gegenüber dem Verdichter exakt zu positionieren und eine fehlerhafte Erfassung der Winkellage aufgrund einer gegenüber der Referenzlage verdreht befestigten Vorrichtung auszuschließen, ist diese mittels zweier Vorsprünge gegenüber einem am Verdichter angeordneten Referenzelement ausgerichtet festlegbar. Das Referenzelement ist dabei vorzugsweise als Umfangsnut ausgebildet, in der an der Halteeinrichtung vorgesehene Vorsprünge als Federelemente einer Nut- und Federverbindung d.h. formschlüssig, einsetzbar sind. Ein gegenüber der Referenzlage verdreht sitzende Vorrichtung kann somit vermieden werden. Vorzugsweise ist in jedem Vorsprung eine federgelagerte Kugel vorgesehen, die geringfügig aus einer Seitenwand des Vorsprungs herausragen kann. Jede Kugel stützt sich an einer der beiden Seitenwände der Umfangsnut ab und drückt somit die ihr gegenüberliegende Fläche des Vorsprungs an die andere der beiden Seitenwände der Umfangsnut, wodurch eine exakte Lage der Vorrichtung erzielt wird.

Um eine besonders einfache Bestimmung der Winkellage einer verdrehbaren Verdichterleitschaufel zu ermöglichen, ist die Referenzlage diejenige Lage der um die Längsachse drehbaren Messfläche, bei der diese senkrecht zur Maschinenachse steht. Die korrekt gegenüber dieser Referenzlage ausgerichtete Vorrichtung erfasst bei sich in der Referenzlage befindlichen Messfläche eine identische Distanz.

Die von der Auswerteinheit bestimmbare Winkellage wird vorzugsweise von einer Anzeigeeinrichtung digital angezeigt. Dabei zeigt die Anzeigeeinrichtung eine Winkellage von 0° an, wenn sich die Messfläche in der Referenzlage befindet.

Um die ermittelten Winkellagen für statistische Untersuchungen und Dokumentationszwecke weiterverwendbar bereitzuhalten, können diese beispielsweise in einem Zwischenspeicher der Vorrichtung oder in einer Datenbank abgespeichert werden. Die abgespeicherten Winkellagen können zudem über handelsübliche Schnittstellen aus der Vorrichtung ausgelesen werden.

Folglich kann durch die Verwendung der mobilen Vorrichtung ohne bewegliche Teile Messtoleranzen an Führungen und fehlerhafte Handhabungen von Messschenkeln vermieden werden. Außerdem gewährleisten die Druckstücke eine genaue, reproduzierbare Ausrichtung der Vorrichtung am Verdichter bzw. am Leitschaufelträger, wobei die Magnete die Handhabung erleichtern und die Bedienung der Vorrichtung nur durch einen Monteur ermöglichen. Ablesefehler können durch vergleichsweise große, digitale Darstellungen des Messergebnisses ausgeschlossen werden.

Die Erfindung wird anhand von vier Figuren erläutert. Es zeigen:
- FIG 1: eine Gasturbine in einem Längsteilschnitt,
- FIG 2: die Draufsicht auf einen Verdichterleitschaufelträger mit einem Verstellhebel,
- FIG 3: die Vorrichtung zum Bestimmen der Winkellage der um ihre Längsachse drehbaren Verdichterleitschaufel in einer perspektivischen Ansicht und
- FIG 4: die Einbausituation der Vorrichtung zur Bestimmung der Winkellage am Verdichter der Gasturbine.

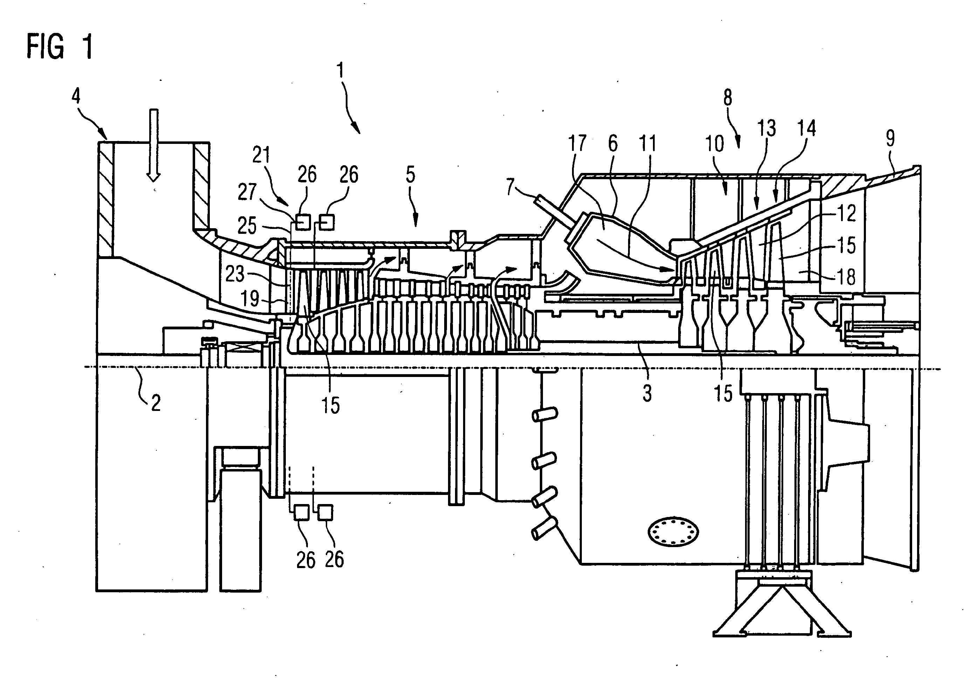

FIG 1 zeigt eine als Gasturbine 1 ausgebildete Turbomaschine in einem Längsteilschnitt. Sie weist im Inneren einen um eine Maschinenachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 mittels einer Turbinenscheibe am Rotor 3 angebracht sind. An dem Rotor 3 ist ein Generator oder eine Arbeitsmaschine (nicht dargestellt) angekoppelt.

Am ansauggehäuseseitigen Eingang des Verdichters 5 sind verstellbare Verdichterleitschaufeln 19 vorgesehen. Die Verdichterleitschaufeln 19 sind strahlenförmig im ringförmigen Strömungskanal des Verdichters 5 angeordnet und können um ihre jeweilige Längsachse 23 von einer Antriebsvorrichtung 21 gedreht werden, um beispielsweise den die Gasturbine 1 durchströmenden Massenstrom einzustellen. Je nach Anstellwinkel, der auch Staffelungswinkel genannt wird, kann ein besonders großer oder ein kleiner Massenstrom die Gasturbine 1 bedarfsgerecht durchströmen. Um Strömungsverluste in der angesaugten Umgebungsluft zu reduzieren und um eine Schwingungsanregung von sich unmittelbar stromab der Verdichterleitschaufeln 19 drehenden Laufschaufeln 15 zu verhindern, welche bei einer über den Umfang gesehen ungleichmäßigen Anströmung der Laufschaufeln 15 erfolgt, werden alle Verdichterleitschaufeln 19 synchron unter stetiger Beibehaltung gleicher Anstellwinkel mittels der Antriebsvorrichtung 21 verstellt.

Die Antriebsvorrichtung 21 ist außerhalb des Strömungskanals vorgesehen und umfasst neben Verstellhebeln 27, die jeweils einer Verdichterleitschaufel 19 zugeordnet sind, einen alle Verstellhebel 27 gleichzeitig betätigenden Stellring 26, der den Verdichter 5 ringartig umgreift.

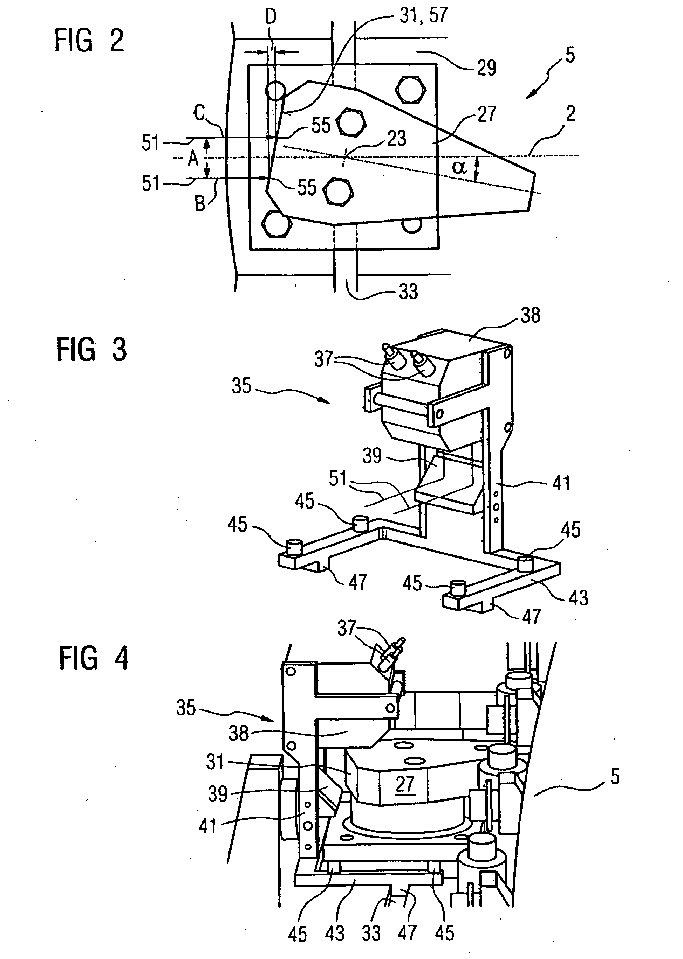

FIG. 2 zeigt die, bezogen auf die Maschinenachse 2, radiale Draufsicht auf einen Verstellhebel 27 für die auch als verstellbare Verdichtereinlassschaufel (Inlet Guide Vane) bezeichnete Verdichterschaufel 19. Zwischen dem Verstellhebel 27 und dem Schaufelblatt der Verdichterschaufel 19 ist das Verdichtergehäuse 29 oder der Verdichterleitschaufelträger vorgesehen. Das Schaufelblatt der Verdichterschaufel 19 sowie der Verstellhebel 27 sind starr miteinander verbunden und somit beide um ihre gemeinsame Längsachse 23 synchron verdrehbar.

Zur Bestimmung der Winkellage der im Verdichter 5 angeordneten, um ihre Längsachse 23 drehbaren Verdichterleitschaufeln 19 ist am Verstellhebel 27 eine Messfläche 31 vorgesehen, die sich mit der Verdichterleitschaufel 19 und dementsprechend mit dessen Schaufelblatt synchron dreht. Um die Winkellage der zur Längsachse 23 parallelen Messfläche 31 gegenüber einer Referenzlage zu bestimmen, ist die in FIG 3 dargestellte Vorrichtung 35 vorgesehen. Die Referenzlage der Messfläche 31 ist diejenige der von der Messfläche 31 einnehmbaren Lagen, in der diese senkrecht zur Maschinenachse 2 steht.

Die Vorrichtung 35 umfasst mindestens zwei Distanz-Sensoren 37, welche vorzugsweise als Laser-Distanz-Sensoren ausgebildet sind. Ferner umfasst die Vorrichtung 35 eine als Spiegel ausgebildete Umlenkeinheit 39, welche starr, aber in ihrer Neigung einstellbar an der Halteeinrichtung 41 der Vorrichtung 35 befestigt ist. Die Halteeinrichtung 41 umfasst ferner einen U-förmigen Haltefuß 43, an dem zur Befestigung der Vorrichtung 35 am Verdichter 5 mehrere Dauermagnete 45 vorgesehen sind. Ferner sind am Haltefuß 43 zwei Vorsprünge 47 vorgesehen, die in eine am Verdichterleitschaufelträger 29 vorgesehene umlaufende Umfangsnut 33 (FIG 2) einsetzbar sind. Um einen gegenüber dem Verdichter 5 bzw. Referenzlage verdrehten Sitz der Vorrichtung 35 auszuschließen, sind zudem in den Vorsprüngen jeweils federgelagerte, geringfügig hervorstehende Kugeln angebracht, die sich an einer Seitenwand der Umfangsnut abstützen können.

FIG 4 zeigt die am Verdichter 5 befestigte Vorrichtung 35 in ihrer Betriebslage bereit zur Messung der Winkellage der Verdichterleitschaufel 19.

Die Bestimmung der Winkellage der Verdichterleitschaufel 19 bezogen auf die Referenzlage wird anhand der FIG 2 erläutert. Die von den beiden Distanz-Sensoren 37 aussendbaren sichtbaren Strahlen 51 werden über die Umlenkeinheit 39 auf die Messfläche 31 projiziert, auf der sich dann jeweils ein Messpunkt 55 abzeichnet. Das von jedem Messpunkt 55 reflektierte Licht wird über die Umlenkeinheit 39 und über eine jeweils im Sensor integrierte Empfangsoptik auf ein positionsempfindliches Element abgebildet, woraus der Distanz-Sensor 37 mittels des Triangulationsprinzips die jeweilige Distanz B, C zwischen ihm und der Messfläche 31 ermitteln kann. Eine, die sich auf der Oberfläche des Verstellhebels 37 abzeichnenden Messpunkte 55 verbindende, fiktive Gerade 57 erstreckt sich senkrecht zur Längsachse 23.

Sofern sich die Messfläche 31 des Verstellhebels 27 in der Referenzlage befindet, erfassen die beiden Distanz-Sensoren 37 jeweils eine gleich große Distanz B, C. Aufgrund der in FIG 2 dargestellten, aus der Referenzlage herausgedrehten Messfläche 31 und der dementsprechend synchron verdrehten Verdichterleitschaufel 19 erfassen die beiden Distanz-Sensoren 37 jeweils unterschiedlich große Distanzen B, C. Die Differenz D zwischen den beiden erfassbaren Distanzen B, C ist dabei umso größer, je weiter die Messfläche 31 aus ihrer Referenzlage herausgedreht ist.

Die beiden Distanz-Sensoren 37 sind derart angeordnet, dass deren Strahlen 51 mit einem vorbestimmten Abstand A parallel zueinander verlaufen. Aufgrund des in der Mess- und Auswerteeinheit 38 hinterlegten Abstandes A der beiden parallelen Strahlen 51 und der weiter ermittelten Differenz D kann anhand mittels bekannter trigonometrischer Funktionen der Winkel α von der Mess- und Auswerteeinheit 38 bestimmt werden, der die Winkellage der Verdichterleitschaufel 19 bezogen auf ihre Referenzlage repräsentiert.

Sofern sich die Messfläche 31 des Verstellhebels 27 in der Referenzlage befindet, zeigt eine an der Vorrichtung 35 nicht weiter dargestellte Anzeigeeinrichtung die Winkellage von 0° digital an. Eine Verdrehung des Verstellhebels 27 im Uhrzeigersinn wird beispielsweise mit einem positiven Winkel gekennzeichnet, wohingegen eine Verdrehung der Verdichterleitschaufel 19 entgegen dem Uhrzeigersinn mit einem negativen Vorzeichen angezeigt wird.

Ferner kann die Vorrichtung 35 auch weitere Mittel umfassen, mit denen die von ihr bestimmbaren Winkellagen speicherbar und aus der die abgespeicherten Winkellagen auslesbar sind, damit diese zu statistischen Berechnungen weiterverarbeitet werden können.

Insgesamt kann mit der Vorrichtung 35 zur Bestimmung der Winkellage einer in einem Verdichter 5 angeordneten, um ihre Längsachse 23 drehbaren Verdichterleitschaufel 19, der eine sich synchron mit ihr drehende Messfläche 31 zugeordnet ist, eine besonders zuverlässige, einfache sowie fehlerfreie Erfassung der Winkellagen durchgeführt werden. Die Winkellage der sich um ihre Längsachse drehbaren Verdichterleitschaufel 19 lässt sich äußerst präzise und reproduzierbar bestimmen.

Die Vorrichtung 35 weist hierzu mindestens eine Halteeinrichtung 41, die zur ausgerichteten Befestigung der Vorrichtung 35 am Verdichter 5 vorgesehen ist, und zumindest eine Mess- und Auswerteeinheit 38 auf, welche zumindest zwei Distanz-Sensoren 37 umfasst, die jeweils eine Distanz B, C zu der aus der Referenzlage herausdrehbaren Messfläche 31 erfassen, wodurch die Winkellage der Messfläche 31 bezogen auf ihre Referenzlage in Abhängigkeit der beiden erfassten Distanzen B, C von der Mess- und Auswerteeinheit 38 bestimmbar ist.

## Patentansprüche

1. Vorrichtung (35) zur Bestimmung der Winkellage einer in einem Verdichter (5) angeordneten, sich um ihre Längsachse (23) drehbaren Verdichterleitschaufel (19), der eine sich synchron mit ihr drehende Messfläche (31) zugeordnet ist,
mit einer Halteeinrichtung (41), die zur Befestigung der Vorrichtung (35) am Verdichter (5) vorgesehen ist und
mit einer Mess- und Auswerteeinheit (38), die zumindest zwei Distanz-Sensoren (37) umfasst, welche jeweils eine Distanz (B, C) zu der aus einer Referenzlage herausdrehbaren Messfläche (31) erfassen, wodurch die Winkellage der Messfläche (31) bezogen auf ihre Referenzlage in Abhängigkeit der beiden erfassten Distanzen (B, C) von der Mess- und Auswerteeinheit (38) bestimmbar ist.

2. Vorrichtung (35) nach Anspruch 1,
bei der die Distanz-Sensoren (37) als Laser-Distanz-Sensoren ausgebildet sind.

3. Vorrichtung (35) nach Anspruch 1 oder 2,
bei der die von den Distanz-Sensoren (37) aussendbaren Strahlen (51) über eine Umlenkeinheit (39) auf die Messfläche (31) umlenkbar sind.

4. Vorrichtung (35) nach einem der vorangehenden Ansprüche,
bei der die Distanz-Sensoren (37) und ggf. die Umlenkeinrichtung (39) derart angeordnet sind, dass jeder von den Distanz-Sensoren (37) erfassbare Strahl in jeweils einem auf der Messfläche (31) angeordnetem Punkt (55) reflektiert wird und dass sich eine fiktive, die beiden Punkte (55) verbindende Gerade (57) quer zur Längsachse (23) erstreckt.

5. Vorrichtung (35) nach Anspruch 5,
bei der sich die Gerade (57) senkrecht zur Längsachse (23) erstreckt.

6. Vorrichtung (35) nach einem der vorangehenden Ansprüche,
bei der die Halteeinrichtung (41) mehrere Magnete (45), insbesondere Dauermagnete umfasst.

7. Vorrichtung (35) nach einem der vorangehenden
Ansprüche,
die mittels zweier Druckstücke gegenüber einem am Verdichter (5) angeordneten Referenzelement ausgerichtet festlegbar ist.

8. Vorrichtung (35) nach einem der vorangehenden
Ansprüche,
bei der die Referenzlage diejenige Lage der um die Längsachse (23) drehbaren Messfläche (31) ist, bei der diese senkrecht zur Maschinenachse (2) steht.

9. Vorrichtung (35) nach einem der vorangehenden
Ansprüche,
die eine Anzeigeeinrichtung zur Anzeige der von der Auswerteeinheit (38) bestimmbaren Winkellage aufweist.

10. Vorrichtung (35) nach Anspruch 10,
bei der die Anzeigeeinrichtung eine Winkellage von 0° anzeigt, wenn sich die Messfläche (31) in ihrer Referenzlage befindet.

11. Vorrichtung (35) nach einem der vorangehenden
Ansprüche,
in der die bestimmbaren Winkellagen speicherbar und aus der die abgespeicherten Winkellagen auslesbar sind.

## Claims

1. Device (35) for determining the angular position of a compressor stator blade (19), which is rotatable around its longitudinal axis (23) and arranged in a compressor (5), and with which is associated a measuring surface (31) which rotates synchronously with it,
with a mounting unit (41), which is provided for fastening the device (35) on the compressor (5) and
with a measuring and evaluating unit (38), which comprises at least two distance sensors (37) which record in each case a distance (B, C) to the measuring surface (31) which is rotatable from a reference position, as a result of which the angular position of the measuring surface (31), with regard to its reference position in dependence upon the two recorded distances (B, C), is determinable by the measuring and evaluating unit (38).

2. Device (35) according to Claim 1,
in which the distance sensors (37) are formed as laser distance sensors.

3. Device (35) according to Claim 1 or 2,
in which the beams (51) which are transmittable by the distance sensors (37) are deflectable onto the measuring surface (31) via a deflection unit (39).

4. Device (35) according to one of the preceding claims,
in which the distance sensors (37) and, if applicable, the deflection unit (39), are arranged in such a way that each beam which is recordable by the distance sensors (37) is reflected in each case at a point (55) which is arranged on the measuring surface (31), and that a fictitious straight line (57) which connects the two points (55) extends transversely to the longitudinal axis (23).

5. Device (35) according to Claim 5,
in which the straight line (57) extends perpendicularly to the longitudinal axis (23).

6. Device (35) according to one of the preceding claims,
in which the mounting unit (41) comprises a plurality of magnets (45), especially permanent magnets.

7. Device (35) according to one of the preceding claims,
which by means of two pressure pieces is fastenable in an aligned manner in relation to a reference element which is arranged on the compressor (5).

8. Device (35) according to one of the preceding claims,
in which the reference position is that position of the measuring surface (31), which is rotatable around the longitudinal axis (23), in which this measuring surface is perpendicular to the machine axis (2).

9. Device (35) according to one of the preceding claims,
which has a display unit for display of the angular position which is determinable by the evaluating unit (38).

10. Device (35) according to Claim 10,
in which the display unit displays an angular position of 0°, if the measuring surface (31) is located in its reference position.

11. Device (35) according to one of the preceding claims,
in which the determinable angular positions are storable, and from which the stored angular positions are readable.

## Revendications

1. Dispositif ( 35 ) de détermination de la position angulaire d'une aube ( 19 ) directrice de compresseur, qui est montée dans un compresseur ( 5 ), qui peut tourner autour de son axe ( 23 ) longitudinal et à laquelle est associée une surface ( 31 ) de mesure tournant en synchronisme avec elle, comprenant un système ( 41 ) de maintien, qui est prévu pour la fixation du dispositif ( 35 ) au compresseur ( 5 ) et comprenant une unité ( 8 ) de mesure et d'exploitation, qui comprend au moins deux capteurs ( 37 ) de distance, lesquels relèvent respectivement une distance ( B, C ) à la surface ( 31 ) de mesure pouvant en tournant sortir d'une position de référence, de sorte que la position angulaire de la surface ( 31 ) de mesure par rapport à sa position de référence peut être déterminée en fonction des deux distances ( B, C ) relevées par l'unité ( 38 ) de mesure et d'exploitation.

2. Dispositif ( 35 ) suivant la revendication 1,
dans lequel les capteurs ( 37 ) de distance sont constitués sous la forme de capteurs de distance laser.

3. Dispositif ( 35 ) suivant la revendication 1 ou 2,
dans lequel les faisceaux ( 51 ) pouvant être émis par les capteurs ( 37 ) de distance peuvent être déviés sur la surface ( 31 ) de mesure par une unité ( 39 ) de déviation.

4. Dispositif ( 35 ) suivant l'une des revendications précédentes,
dans laquelle les capteurs ( 37 ) de distance et le cas échéant le dispositif ( 39 ) de déviation sont disposés de sorte que chaque faisceau pouvant être détecté par les capteurs ( 37 ) de distance est réfléchi respectivement en un point disposé sur la surface ( 31 ) de mesure et en ce qu'une droite ( 57 ) fictive passant par les deux points ( 55 ) s'étende transversalement à l'axe ( 23 ) longitudinal.

5. Dispositif ( 35 ) suivant la revendication 4,
dans lequel la droite ( 57 ) s'étend perpendiculairement à l'axe ( 23 ) longitudinal.

6. Dispositif ( 35 ) suivant l'une des revendications précédentes,
dans lequel le dispositif ( 41 ) de maintien comprend plusieurs aimants ( 45 ), notamment des aimants permanents.

7. Dispositif ( 35 ) suivant l'une des revendications précédentes,
qui peut être fixé de manière orientée par rapport à un élément de référence disposé sur le compresseur ( 5 ) au moyen de deux pièces de pression.

8. Dispositif ( 35 ) suivant l'une des revendications précédentes,
dans lequel la position de référence est la position de la surface ( 31 ) de mesure pouvant tourner autour de l'axe ( 23 ) longitudinal, dans laquelle celle-ci est perpendiculaire à l'axe ( 2 ) de la machine.

9. Dispositif ( 35 ) suivant l'une des revendications précédentes,
qui a un dispositif d'affichage de la position angulaire pouvant être déterminée par l'unité ( 38 ) d'exploitation.

10. Dispositif ( 35 ) suivant la revendication 9,
dans lequel le dispositif d'affichage indique une position angulaire de 0° lorsque la surface ( 31 ) de mesure se trouve dans sa position de référence.

11. Dispositif ( 35 ) suivant l'une des revendications précédentes,
dans lequel les positions angulaires qui peuvent être déterminées peuvent être mémorisées et être lues à partir des positions angulaires mémorisées.
